# EUROPEAN PATENT SPECIFICATION

(11) **EP 2 708 732 B1**
(45) Date of publication and mention of the grant of the patent: **13.01.2016**
(21) Application number: 12184761.0
(22) Date of filing: 17.09.2012
(51) Int. Cl.: F03D 1/06

(54) **Device for spacing a hub flange and a blade flange, system comprising a rotor hub, a rotor blade and a device for spacing and method of installing a rotor blade on a rotor hub**
Abstandsvorrichtung für einen Nabenflansch und einen Blattflansch, System mit einer Rotornabe, einem Rotorblatt und eine Abstandsvorrichtung und Verfahren zur Installation eines Rotorblatts auf einer Rotornabe
Dispositif permettant d'espacer une flasque de moyeu et une bride de pale, système comprenant un moyeu de rotor, pale de rotor et dispositif permettant d'espacer et procédé d'installation d'une pale de rotor sur un moyeu de rotor

(43) Date of publication of application: 19.03.2014
(73) Proprietor: Areva Wind GmbH, 27572 Bremerhaven (DE)
(72) Inventor: Wagner, Raimund, 22391 Hamburg (DE); Monux Belloso, Oscar, 28205 Bremen (DE)
(74) Representative: Prinz & Partner mbB

(56) References cited:
- EP-A2- 1 959 129
- GB-A- 2 483 678
- GB-A- 2 487 083
- US-A1- 2010 254 813

## Description

### FIELD OF THE INVENTION

The invention relates to a device for spacing a hub flange of a rotor hub of a wind generator from a blade flange of a rotor blade during installation of the rotor blade on the rotor hub. Furthermore, the invention relates to a system comprising a rotor hub having a rotor blade bearing assembly comprising a hub flange, a rotor blade having a blade flange and a device for spacing the hub flange from the blade flange. The invention further relates to a method of installing a rotor blade on a rotor hub of a wind generator.

### BACKGROUND

During installation of an offshore wind generator (also referred to as a wind power plant or a wind driven power plant), a complete rotor is assembled onshore and subsequently shipped to the offshore wind generator. Typically, the three rotor blades are mounted on a rotor hub and the complete rotor assembly is transferred to a suitable ship or barge for transport to the offshore wind generator. Upon arrival at the offshore wind generator, the rotor assembly is unloaded from the transport ship and mounted on the nacelle of the wind generator, for example using a high load crane barge.

In some aspects, the onshore assembly of the rotor is convenient and efficient because it is technically less demanding than offshore works. Installation of the rotor blades may be performed using the equipment which is available for example at a production facility. Furthermore, there is little influence of the weather conditions on the assembly works. However, a rotor assembly of an offshore wind generator is a large device having a diameter which can be up to 135 m. Narrow port facilities may hinder the transport from the onshore facility to the offshore wind generator. For servicing the rotor assembly, the complete rotor is removed from the nacelle of the wind generator. To conduct the works, a high load crane barge has to be available and has to be operated under offshore conditions. After removal of the rotor assembly, a further transport of this huge part is necessary.

Another option is the offshore assembly of the rotor blades. This means, the rotor hub is first mounted to the nacelle and the rotor blades are subsequently mounted on the rotor hub. The rotor blades may be handled using a special device for grabbing the rotor blade and for positioning it in virtually any angular position for installation on the rotor hub.

A blade flange which resides at the root of the rotor blade is attached to a hub flange of the rotor hub. The rotor blade is fixed to the rotor hub by typically more than 100 bolts which project from the blade flange through corresponding through holes in the hub flange. Nuts have to be placed on the bolt heads. However, placement of the nuts is exclusively possible using certain hand holes in an internal reinforcement structure of the rotor hub. The blade bolts and the hand holes have to be aligned and due to the limited number of hand holes, only few nuts may be placed on the bolt heads simultaneously. The blade has to be tilted (or pitched) so as to align further bolts with the hand holes for placement of nuts. This is however a time consuming process.

GB 2 487 083 A discloses a device for spacing a hub flange (56) of a rotor hub of a wind generator from a blade flange (page 3, lines 1-5) of a rotor blade during installation of the rotor blade on the rotor hub, the device for spacing comprising a distance member (62) defining a clearance between the hub flange and the blade flange, wherein the distance member is configured for variable adjustment of the clearance between the hub flange and the rotor flange.

US 2010/254813 A1 also discloses a blade attaching mechanism which defines a variable clearance between the blade and the hub.

EP 1 959 129 A2 discloses a system comprising a rotor hub having a blade root bearing assembly with a hub flange, a rotor blade having a blade flange and a device for spacing the hub flange from the blade flange. The blade root bearing assembly of the rotor hub is configured to have a clearance between an inner surface of the hub flange and an inner reinforcement structure of the rotor hub facing said inner surface. There is a plurality of bolts residing in the blade flange of the rotor blade and extending from the blade flange though corresponding apertures in the hub flange, when the blade is mounted on the rotor hub. The device for spacing comprises a distance member having a predetermined thickness to define a clearance between the blade flange and the hub flange, wherein said thickness is selected so as to provide an increased clearance between the inner surface of the hub flange and the inner reinforcement structure of the rotor hub so as to allow lateral insertion and placement of nuts on the boltheads of said bolts by accessing the boltheads via said increased clearance. A similar system is disclosed in GB 2 483 678 A.

However, the previously mentioned systems and methods require a too complicated handling of components.

### SUMMARY

It is an object of the invention to provide a device, a system and a method allowing a simpler and faster assembly of a rotor blade on a rotor hub of a wind generator compared with the prior art.

The object is solved by the subject matter of claims 1, 6 and 7.

In one aspect of the invention, a device for spacing a hub flange of a rotor hub of a wind generator from a blade flange of a rotor blade is provided. The device is for spacing the hub flange and blade flange during installation of the rotor blade on the rotor hub. The device comprises a distance member defining a clearance between the hub flange and the blade flange. This distance member is configured for variable adjustment of the clearance between the hub flange and the rotor flange.

A blade root bearing assembly of a rotor hub is typically configured to have a fixed clearance between an inner surface of the hub flange and an inner reinforcement structure of the rotor hub facing said inner surface. The inner surface of the hub flange is averted from a contact surface of the hub flange which is for contacting an opposite contact surface of a blade flange. When the blade is mounted on the rotor hub, bolts which extend from the blade flange project through corresponding cavities or through holes in the hub flange. In this status, the bolt heads protrude from the inner surface of the hub flange in a direction of the inner reinforcement structure of the rotor hub. However, said fixed clearance between the inner surface of the hub flange and the reinforcement structure of the rotor hub also limits a second clearance between the bolt heads and the reinforcement structure of the rotor hub. Typically, this second clearance is too small for insertion and placement of nuts on bolt heads.

Advantageously, the device for spacing the hub flange and the blade flange allows increasing this second clearance between the inner reinforcement structure of the rotor hub and the bold heads. This is performed by providing a clearance between the hub flange and the blade flange. Due to this measure, an excess length between the bolt heads and the inner surface of the hub flange is reduced. As a consequence, an arbitrary number of nuts may be laterally inserted through the second clearance and may be placed on the bolt heads. This will allow a faster assembly of the rotor blade on the rotor hub, because placement of the nuts is not limited by the number of available hand holes. Furthermore, no movement or tilting of the rotor blade and alignment of the bolts with respect to the hand holes is necessary.

However, if the rotor blade presses against the hub, the device for spacing may be clamped between the hub flange and the blade flange; to be more precise, between the contact surface of the hub flange and the contact surface of the blade flange. This will complicate removal of the device for spacing. The clamping forces can be avoided if the tool for mounting the rotor blade slightly moves the rotor blade away from the rotor hub. However, any operation of this tool is rather slow and any handling operation of the rotor blade represents a risk for damage of either the supporting structure of a wind generator or the rotor blade itself. Finally, a gap between the hub flange and the rotor flange of merely a few millimeters will make the rotor blade very susceptible to wind forces. Advantageously, the device for spacing the hub flange and the blade flange according to aspects of the invention comprises a distance member which is configured for variable adjustment of the clearance between the hub flange and the rotor flange. In particular, the distance member is configured for lowering a clearance between the hub flange and the rotor flange. For example, the device for spacing may be set to an initial value defining a first clearance between the hub flange and the blade flange. If clamping forces occur between the rotor blade and the rotor hub, the device for spacing may be set to a second and lower value defining a second and lower clearance. This will release the device for spacing from the initial pressure and will allow a convenient and easy removal of the device from an intermediate space between the hub flange and the blade flange.

According to an advantageous embodiment of the invention, the distance member is wedge shaped. The distance member may have a plane which inclines from a tip of the distance member having a first thickness to a root of the distance member having a second and greater thickness. Furthermore, the distance member may be movable in a direction pointing from the tip to the root. This movement will adjust the clearance between the hub flange and the blade flange due to the wedged shape of the distance member. A wedge shaped distance member provides a reliable, hard-wearing and economic solution for a distance member which is configured for variable adjustment of said clearance.

Furthermore, the device for spacing may comprise a supporting structure and a driving element, according to another embodiment of the invention. The distance member may be mounted on the supporting structure and may be movable with respect to the supporting structure by help of the driving element. The driving element may be coupled to the supporting structure and to the root of the distance member. In particular, the driving element may be a spindle or a hydraulic cylinder.

Furthermore, according to the invention, the supporting structure and the distance member define a clamp which is configured to engage with the hub flange when the device is mounted on this hub flange. In that state, the distance member directly rests on the contact surface of the hub flange. The distance member is movable in radial direction of the hub flange towards an interior of the hub flange.

The supporting structure of the device for spacing engages the hub flange and there is no need for an operator to apply a force towards an interior of the hub flange when adjusting the clearance between the hub flange and the blade flange. This is advantageous in terms of safety because a service team can let its hands off the particular gap between the blade flange and the hub flange. Full attention may be paid to bolts and nuts so as to prevent any member from falling down or getting lost.

According to another aspect of the invention, a system comprising a rotor hub, a rotor blade and a device for spacing the hub flange from the blade flange is provided. The rotor hub has a blade root bearing assembly comprising the hub flange. This blade root bearing assembly is configured to have a clearance between an inner surface of the hub flange and an inner reinforcement structure of the rotor hub. Furthermore, a plurality of bolts resides in the blade flange of the rotor blade. The bolts extend from the blade flange through corresponding apertures or through holes in the hub flange when the blade is mounted on the rotor hub. The device for spacing in said system according to aspect of the invention comprises a distance member having a predetermined thickness. This predetermined thickness defines a clearance between the blade flange and the hub flange. Said thickness is selected so as to provide an increased clearance between the inner reinforcement structure of the rotor hub and the bolt heads of the bolts of the rotor blade. This increased clearance will allow a lateral insertion and placement of nuts on the bolt heads by access of the nuts to the bolts heads via said increased clearance.

Advantageously, the particular system comprises a distance member having a tailored and predetermined thickness for providing an increased clearance being great enough for placement of the nuts on the bold heads.

In particular, the system may comprise a device for spacing having a distance member which is configured for variable adjustment of the clearance between the hub flange and the rotor flange. This device for spacing may be configured according to the abovementioned aspects of the invention. Furthermore, the distance member may be wedge shaped. Further details with regard to this wedge shaped distance member are also mentioned above.

In another advantageous aspect of the invention, a method of installing a rotor blade on a rotor hub of a wind generator is provided. A device for spacing according to aspects of the invention is mounted on a hub flange of the rotor hub. The rotor blade is approached to the hub flange and a contact surface of the blade flange will contact the distance member of the device for spacing. Nuts are mounted on bolts which reside in the blade flange and which extend from the blade flange through corresponding apertures or through holes in the hub flange. Mounting of nuts on the bolt heads is performed laterally via a clearance between an inner reinforcement structure of the rotor hub and the bolts heads. Furthermore, the device for spacing is removed from the hub flange by extracting the distance member from an intermediate space between the hub flange and the blade flange. Finally, the nuts are tightened on the bolts for fixing the rotor blade to the rotor hub.

The device for spacing is mounted so as to engage with the hub flange in that, the distance member directly rests on a contact surface of the hub flange. The distance member may be movable in a radial direction of the hub flange and may be configured according to the previously mentioned aspects of the invention. The distance member may be extracted from the clearance between the hub flange and the blade flange by a movement in a radial direction towards an interior of the hub flange. The distance member may be removed from said clearance with its root first.

Same or similar advantages which have been already mentioned with respect to the device for spacing and with respect to the system according to aspects of the invention apply to the method according to aspects of the invention in a same or similar way and are therefore not repeated.

### BRIEF DESCRIPTION OF DRAWINGS

Further aspects and characteristics of the invention ensue from the following description of preferred embodiments of the invention with reference to the accompanying drawings, wherein
FIG. 1 is a simplified perspective view of a device for spacing according to an embodiment of the invention,
FIG. 2 is a simplified side view of the device of FIG. 1,
FIG. 3 is a simplified backside view of the device of FIG. 1,
FIG. 4 is a simplified perspective view showing a wind generator during assembly of a rotor blade on a rotor hub and
FIG. 5 is a detailed simplified perspective view showing a part of a rotor hub of a wind generator and a device for spacing, according to an embodiment of the invention, which is mounted on a hub flange of this rotor hub.

### DETAILED DESCRIPTION OF EXAMPLE EMBODIMENTS

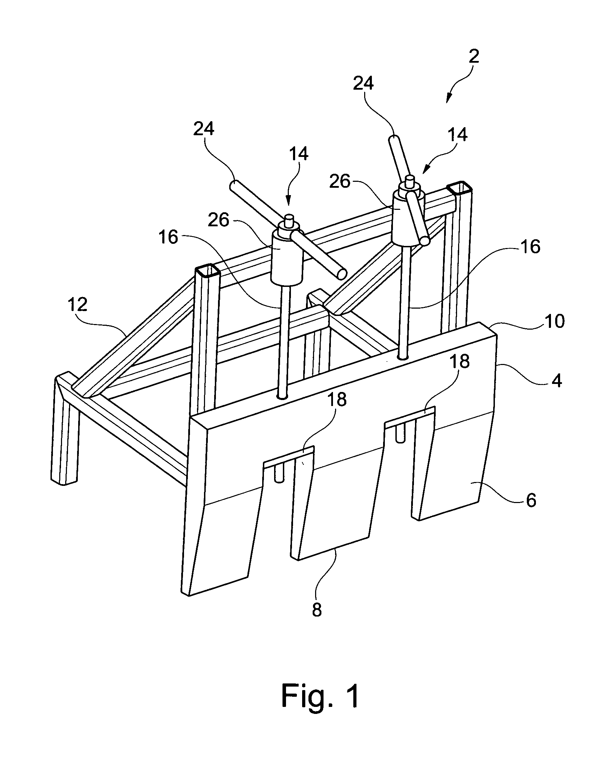

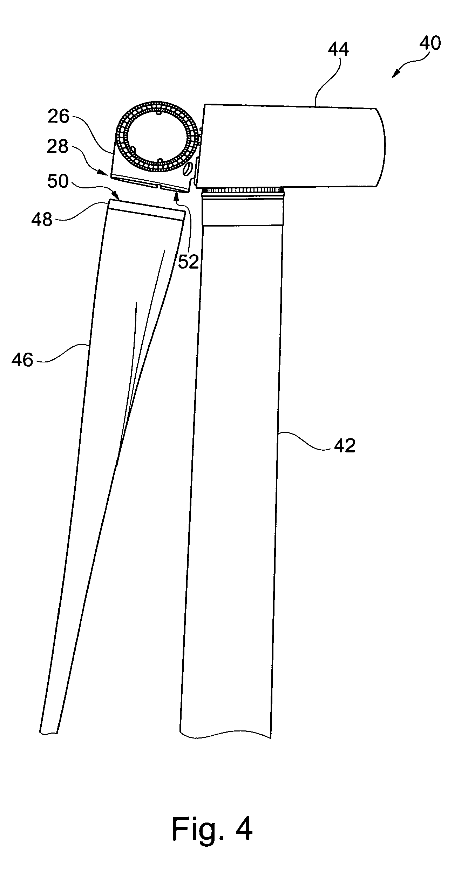

FIG. 1 is a simplified perspective view showing a device 2 for spacing a hub flange of a rotor hub of a wind generator from a blade flange of a rotor blade of a wind generator, preferably during installation of the rotor blade on the rotor hub. Details of the wind generator will be explained by making reference to FIG. 4 further below. The device 2 in FIG. 1 comprises a distance member 4 which is configured for defining a clearance between the hub flange and the blade flange. The distance member 4 is configured for variable adjustment of said clearance. According to the embodiment of FIG. 1, the distance member 4 is wedge shaped. It comprises a plane 6 inclining from a tip 8 of the distance member 4 having a first and lower thickness to a root 10 of the distance member 4 having a second and greater thickness. By way of an example only, the distance member 4 comprises three arms which are arranged side by side giving the distance member 4 a basset like shape. Each arm comprises a tip 8 and an inclining plane 6; only few of the tips 8 and planes 6 are given reference numbers due to clarity reasons only.

The distance member 4 is mounted on a supporting structure 12, wherein the distance member 4 is movable with respect to this supporting structure 12 by help of driving elements 14. According to the embodiment in FIG. 1, the driving elements 14 are spindles. A threaded rod 16 extends through a sleeve 26, which is fixed to the supporting structure 12. For example, the sleeve 26 is welded to one of the beams of the supporting structure 12. A handle 24 is fixed to the threaded rod 16 for operation of the driving element 14. An opposite end member of the threaded rod 16 extends through the distance member 4 and its external thread engages a internal thread of a supporting plate 18 which engages the distance member 4 between the individual arms. If the handle 24 is rotated, the driving element 14 will move the distance member 4 with respect to the supporting structure 12. For removal of the distance member 4 from a clearance between the hub flange and the blade flange, it is moved or pulled towards the sleeve 26. The driving element 14 is not limited to a spindle; it may be replaced, for example by a suitable hydraulic cylinder or by any other suitable driving element.

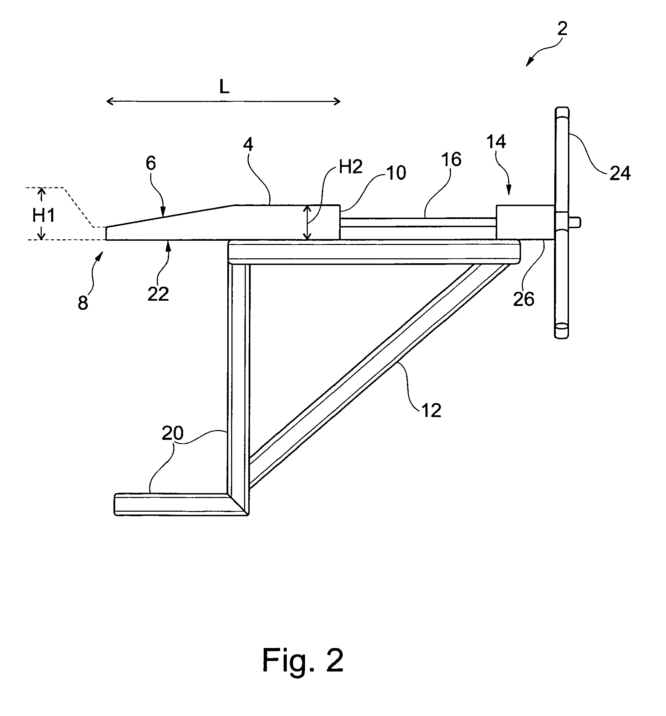

In FIG. 2, there is a simplified side view of the device 2 which is known from FIG. 1. The wedge shaped distance member 4 has a first thickness H1 at its tip 8. An inclining plane 6 starts at this lower first thickness H1 and inclines up to a second and greater higher thickness H2 at the root 10 of the distance member 4. The distance member 4 is movable with respect to the supporting structure 12 in a direction L which extends between the tip 8 and the root 10 of the wedge shaped distance member 4.

The distance member 4 together with an L-shaped part 20 of the supporting structure 12 defines a clamp which is configured to engage with a hub flange of the rotor hub when the device 2 for spacing is mounted on the hub flange. In this state, the distance member 4, in particular its lower surface 22, will directly rest on a contact surface of the hub flange. Furthermore, the distance member 4 will be movable in radial direction of the hub flange. In other words, the device 2 is mounted on the hub flange in that the direction L, which extends between the tip 8 and the root 10 of the wedge shaped distance member 4, is substantially parallel to a radius of the hub flange.

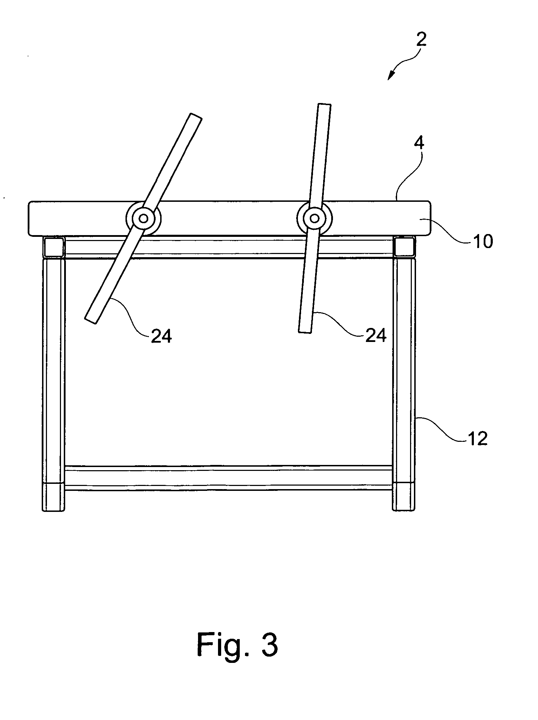

In FIG. 3, there is a simplified backside view showing the device 2 which is known from FIG. 1 and FIG. 2.

A simplified perspective view showing a wind generator 40 is depicted in FIG. 4. The wind generator 40 comprises a supporting structure 42, for example a tower which is funded in the sea if the wind generator 40 is an offshore wind generator, a nacelle 44 which is mounted on top of the supporting structure 42 and a rotor hub 26 which is mounted on the nacelle 44. The rotor hub 26 is mounted on the nacelle 44 prior to assembly of the rotor blades, by way of an example only, a single rotor blade 46 is shown. The rotor blade 46 is lifted to the rotor hub, for example using a special purpose grabbing device (not shown). The rotor blade 46 comprises a blade flange 48 at its root, this blade flange 48 has a contact surface 50 which contacts an opposite contact surface 52 of a hub flange 28, when the rotor blade 46 is mounted on the rotor hub 26.

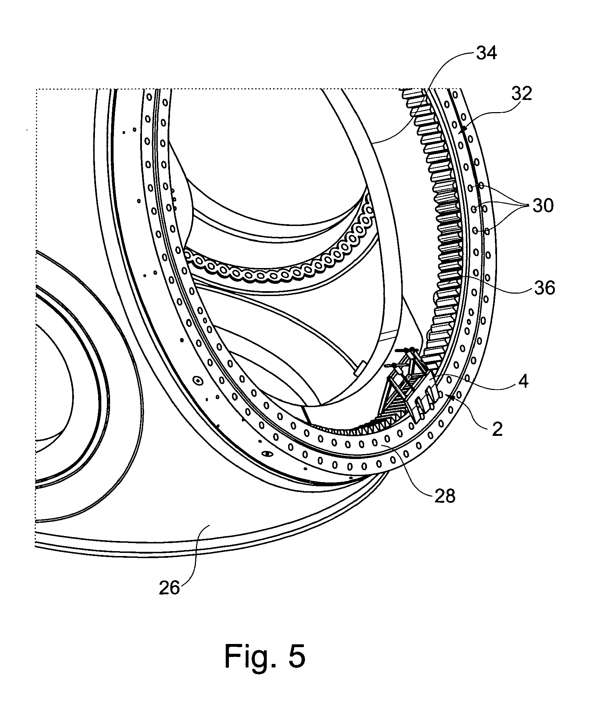

FIG. 5 is a simplified perspective view showing a detail of the rotor hub 26 of the wind generator 40. The rotor hub 26 comprises a blade root bearing assembly comprising the hub flange 28. The hub flange 28 comprises a plurality of through holes 30 (only some are given reference numbers to enhance clarity) which are configured to receive bolts extending from the blade flange 48 of the rotor blade 46. The hub flange 28 has a contact surface 32 which is configured to contact the opposite contact surface 50 of the blade flange 48 when the rotor blade 46 is mounted on the rotor hub 26. The device for spacing 2 is arranged so as to engage the hub flange 28. The distance member 4 directly resides on the contact surface 32 of the hub flange 28. The L-shaped part 20 of the supporting structure 12 (see FIG. 2) engages an inner surface (not visible) of the hub flange 28 and a crown gear 36 inside the hub flange 28. The inner surface of the hub flange 28 faces an inner reinforcement structure 34of the rotor hub 26.

There is a limited clearance between the inner surface of the hub flange 28 and this inner reinforcement structure 34. Accordingly, when the bolts of the rotor blade 46 project through the through holes 30 in the hub flange 28, said clearance limits a second clearance between the bolt head of the bolts and this inner reinforcement structure 34. Said second clearance may be too small for insertion of nuts on the bolts heads. The device for spacing 2 increases this second clearance and allows a lateral insertion and placement of the nuts on the bolt heads by providing access to the bolts heads via the clearance between the inner surface of the hub flange 28 and the inner reinforcement structure 34.

For installation of the rotor blade 46 on the rotor hub 26 of the wind generator 40, the device 2 for spacing is mounted on the hub flange 28. When the rotor blade 46 approaches the hub flange 28, the blade flange 48, to be more precise the contact surface 50 of the blade flange 48 will contact the distance member 4 which directly resides on the contact surface 32 of the hub flange 28. Nuts may be mounted on bolts via the previously explained increased clearance between the inner reinforcement structure 38 and the bolt heads. The distance member 4 of the device 2 for spacing may be removed from the clearance between the hub flange 28 and the blade flange 48 by a movement towards an interior of the hub flange 28. The driving element 14 (see FIG. 2) moves the distance member 4 in direction L with respect to the supporting structure 12 which is supported by an inner surface of the hub flange 28 and by the crown gear 36. The distance member 4 will be released from pressure which may be applied thereon by the blade flange 48 and subsequently, the device 2 for spacing may be easily removed from the hub flange 28. The distance member 4 can be made of various materials like wood or steel. In an advantageous embodiment, the distance member 4 is made of a polymer or plastic. This provides that the distance member 4 has only little weight but high stability.

## Claims

1. A device (2) for spacing a hub flange (28) of a rotor hub (26) of a wind generator (40) from a blade flange (48) of a rotor blade (46) during installation of the rotor blade (46) on the rotor hub (26), the device for spacing (2) comprising a distance member (4) defining a clearance between the hub flange (28) and the blade flange (48), wherein the distance member (4) is configured for variable adjustment of the clearance between the hub flange (28) and the blade flange (48), **characterized in that** the device (2) further comprises a supporting structure (12) and that the distance member (4) is mounted to the supporting structure (12) such that the supporting structure (12) and the distance member (4) define a clamp which is configured to engage with the hub flange (28) when the device (2) is mounted on the hub flange (28).

2. The device (2) according to claim 1, wherein the distance member (4) is wedge shaped having a plane which inclines from a tip (8) of the distance member having a lower thickness to a root (10) of the distance member (4) having a higher thickness and the distance member (4) is movable in a direction pointing from the tip (8) to the root for adjustment of the clearance between the hub flange (28) and the blade flange (48).

3. The device (2) according to claim 2, further comprising a driving element (14), wherein the distance member (4) is mounted on the supporting structure (12) to be movable with respect to the supporting structure (12) by the driving element (14) which is coupled to the supporting structure (12) and to the root (10) of the distance member (4).

4. The device (2) according to claim 3, being further configured such that, when the device (2) is mounted on the hub flange (28) and in that state, the distance member (4) rests on a contact surface (52) of the hub flange (28) which is designated to contact an opposite contact surface (50) of the blade flange (48), and wherein the distance member (4) is movable in a radial direction of the hub flange (28).

5. The device according to claim 3 or 4, wherein the driving element (14) is a spindle or a hydraulic cylinder.

6. A system comprising a rotor hub (26) having a blade root bearing assembly comprising a hub flange (28), a rotor blade (46) having a blade flange (48) and a device for spacing according to anyone of claims 1 to 5, wherein
a) the blade root bearing assembly of the rotor hub is configured to have a clearance between an inner surface of the hub flange (28) and an inner reinforcement structure of the rotor hub facing said inner surface, and
b) a plurality of bolts reside in the blade flange of the rotor blade, wherein the bolts extend from the blade flange (48) though corresponding apertures in the hub flange (28), when the rotor blade (46) is mounted on the rotor hub (26).

7. A method of installing a rotor blade (46) on a rotor hub (26) of a wind generator (40), the method comprising the steps of:
a) mounting a device (2) according to anyone of claims 1 to 5 on a hub flange (28) of the rotor hub (26) such that the clamp formed by the supporting structure (12) and the distance member (4) engage with the hub flange (28) when the device is mounted on the hub flange (28),
b) approaching the rotor blade (46) to the hub flange (28) and contacting a contact surface (50) of the blade flange (48) with the distance member (4),
c) mounting nuts on bolts which reside in the blade flange (48) and which extend from the blade flange (48) though corresponding apertures in the hub flange (28) via a clearance between an inner surface of the hub flange (28) and an inner reinforcement structure of the rotor hub (26) by lateral insertion and placement of nuts on the boltheads of said bolts,
d) removing the device (2) for spacing from the hub flange (28) by extracting the distance member (4) from an intermediate space between the hub flange (28) and the blade flange (48) and
e) tightening the nuts on the bolts

8. The method according to claim 7, wherein
in step d), the distance member (4) is extracted from the clearance between the hub flange (28) and the blade flange (48) by removing the distance member (4) from said clearance by a movement in a radial direction towards an interior of the hub flange (28), wherein the distance member (4) is removed from the clearance with its root (10) first.

## Patentansprüche

1. Vorrichtung (2) zum Beabstanden eines Nabenflansches (28) einer Rotornabe (26) einer Windkraftanlage (40) von einem Blattflansch (48) eines Rotorblattes (46) während der Montage des Rotorblattes (46) an der Rotornabe (26), wobei die Vorrichtung zum Beabstanden (2) ein Distanzelement (4) umfasst, das einen Abstand zwischen dem Nabenflansch (28) und dem Blattflansch (48) definiert, wobei das Distanzelement (4) zur variablen Einstellung des Abstands zwischen dem Nabenflansch (28) und dem Blattflansch (48) ausgeführt ist, **dadurch gekennzeichnet, dass** die Vorrichtung (2) ferner eine Stützstruktur (12) umfasst und dass das Distanzelement (4) so an der Stützstruktur (12) angebracht ist, dass die Stützstruktur (12) und das Distanzelement (4) eine Klammer bilden, die so ausgeführt ist, dass sie mit dem Nabenflansch (28) in Eingriff gelangt, wenn die Vorrichtung (2) an dem Nabenflansch (28) angebracht ist.

2. Vorrichtung (2) nach Anspruch 1, wobei das Distanzelement (4) keilförmig ist und eine Ebene aufweist, die von einer Spitze (8) des Distanzelements, die eine geringere Dicke hat, zu einer Wurzel (10) des Distanzelements (4), die eine größere Dicke hat, geneigt ist, und das Distanzelement (4) zur Einstellung des Abstands zwischen dem Nabenflansch (28) und dem Blattflansch (48) in einer von der Spitze (8) zur Wurzel weisenden Richtung bewegbar ist.

3. Vorrichtung (2) nach Anspruch 2, ferner mit einem Antriebselement (14), wobei das Distanzelement (4) so an der Stützstruktur (12) angebracht ist, dass es von dem mit der Stützstruktur (12) und der Wurzel (10) des Distanzelements (4) gekoppelten Antriebselement (14) bezüglich der Stützstruktur (12) bewegbar ist.

4. Vorrichtung (2) nach Anspruch 3, die ferner so ausgeführt ist, dass dann, wenn die Vorrichtung (2) am Nabenflansch (28) angebracht ist, das Distanzelement (4) in diesem Zustand auf einer Kontaktfläche (52) des Nabenflansches (28) aufliegt, die zur Berührung einer gegenüberliegenden Kontaktfläche (50) des Blattflansches (48) bestimmt ist, und wobei das Distanzelement (4) in einer Radialrichtung des Nabenflansches (28) beweglich ist.

5. Vorrichtung nach Anspruch 3 oder 4, wobei das Antriebselement (14) eine Spindel oder ein Hydraulikzylinder ist.

6. System mit einer Rotornabe (26), die eine Blattwurzellagerbaugruppe aufweist, die einen Nabenflansch (28), ein Rotorblatt (46) mit einem Blattflansch (48) und eine Vorrichtung zum Beabstanden nach einem der Ansprüche 1 bis 5 umfasst, wobei
a) die Blattwurzellagerbaugruppe der Rotornabe so ausgeführt ist, dass sie einen Abstand zwischen einer Innenfläche des Nabenflansches (28) und einer der Innenfläche zugewandten Innenverstärkungsstruktur der Rotornabe aufweist, und
b) mehrere Schrauben sich im Blattflansch des Rotorblattes befinden, wobei die Schrauben sich vom Blattflansch (48) durch entsprechende Öffnungen im Nabenflansch (28) erstrecken, wenn das Rotorblatt (46) an der Rotornabe (26) angebracht ist.

7. Verfahren zur Montage eines Rotorblattes (46) an einer Rotornabe (26) einer Windkraftanlage (40), wobei das Verfahren die folgenden Schritte umfasst:
a) Anbringen einer Vorrichtung (2) nach einem der Ansprüche 1 bis 5 an einem Nabenflansch (28) der Rotornabe (26), derart, dass die von der Stützstruktur (12) und dem Distanzelement (4) gebildete Klammer mit dem Nabenflansch (28) in Eingriff gelangt, wenn die Vorrichtung an dem Nabenflansch (28) angebracht wird,
b) Heranführen des Rotorblattes (46) an den Nabenflansch (28) und Berühren einer Kontaktfläche (50) des Blattflansches (48) mit dem Distanzelement (4),
c) Anbringen von Muttern auf Schrauben, die sich im Blattflansch (48) befinden und sich vom Blattflansch (48) durch entsprechende Öffnungen im Nabenflansch (28) erstrecken, über einen Abstand zwischen einer Innenfläche des Nabenflansches (28) und einer Innenverstärkungsstruktur der Rotornabe (26) durch seitliches Einführen und Aufsetzen von Muttern auf die Schraubenköpfe der Schrauben,
d) Entfernen der Vorrichtung (2) zum Beabstanden von dem Nabenflansch (28), indem das Distanzelement (4) aus einem Zwischenraum zwischen dem Nabenflansch (28) und dem Blattflansch (48) herausgezogen wird, und
e) Anziehen der Muttern auf den Schrauben.

8. Verfahren nach Anspruch 7, wobei
in Schritt d) das Distanzelement (4) aus dem Zwischenraum zwischen dem Nabenflansch (28) und dem Blattflansch (48) herausgezogen wird, indem das Distanzelement (4) durch eine Bewegung in einer Radialrichtung zu einer Innenseite des Nabenflansches (28) hin aus dem Zwischenraum entfernt wird, wobei das Distanzelement (4) mit seiner Wurzel (10) voraus aus dem Zwischenraum entfernt wird.

## Revendications

1. Dispositif d'espacement (2) d'une bride de moyeu (28) d'un moyeu de rotor (26) d'une éolienne (40), d'une bride de pale (48) d'une pale de rotor (46) pendant le montage de la pale de rotor (46) sur le moyeu de rotor (26), le dispositif d'espacement (2) comprenant un élément d'écartement (4) qui définit une distance entre la bride de moyeu (28) et la bride de pale (48), l'élément d'écartement (4) étant réalisé pour l'ajustement variable de la distance entre la bride de moyeu (28) et la bride de pale (48), **caractérisé en ce que** le dispositif (2) comprend en outre une structure de support (12) et **en ce que** l'élément d'écartement (4) est agencé sur la structure de support (12) de telle sorte que la structure de support (12) et l'élément d'écartement (4) forment un collier de serrage qui est réalisé de manière à parvenir en engagement avec la bride de moyeu (28) lorsque le dispositif (2) est monté sur la bride de moyeu (28).

2. Dispositif (2) selon la revendication 1, l'élément d'écartement (4) étant réalisé en forme de clavette avec un plan qui est incliné d'une pointe (8) de l'élément d'écartement, laquelle présente une épaisseur plus faible, vers un pied (10) de l'élément d'écartement (4), lequel présente une épaisseur plus élevée, et l'élément d'écartement (4) étant mobile entre la bride de moyeu (28) et la bride de pale (48) selon un sens dirigé de la pointe (8) vers le pied pour ajuster la distance.

3. Dispositif (2) selon la revendication 2, comprenant en outre un élément d'entraînement (14), l'élément d'écartement (4) étant monté sur la structure de support (12) de manière à pouvoir être déplacer par rapport à la structure de support (12) par l'élément d'entraînement (14) qui est couplé à la structure de support (12) et au pied (10) de l'élément d'écartement (4).

4. Dispositif (2) selon la revendication 3, lequel est en outre réalisé de telle sorte que lorsque le dispositif (2) est monté sur la bride de moyeu (28), l'élément d'écartement (4) repose dans cet état sur une surface de contact (52) de la bride de moyeu (28) laquelle est prévue pour contacter une surface de contact opposée (50) de la bride de pale (48), et l'élément d'écartement (4) étant mobile dans un sens radial de la bride de moyeu (28).

5. Dispositif selon la revendication 3 ou 4, l'élément d'entraînement (14) étant une broche ou un cylindre hydraulique.

6. Système comportant un moyeu de rotor (26) qui présente un ensemble de palier de pied de pale qui comprend une bride de moyeu (28), une pale de rotor (46) avec une bride de pale (48) et un dispositif d'espacement selon l'une des revendications 1 à 5,
a) l'ensemble de palier de pied de pale du moyeu de rotor étant réalisé de manière à présenter une distance entre une surface intérieure de la bride de moyeu (28) et une structure de renforcement intérieure du moyeu de rotor qui est tournée vers la surface intérieure, et
b) plusieurs vis se trouvant dans la bride de pale de la pale de rotor, les vis s'étendant de la bride de pale (48) à travers des orifices correspondants dans la bride de moyeu (28) lorsque la pale de rotor (46) est montée sur le moyeu de rotor (26).

7. Procédé de montage d'une pale de rotor (46) sur un moyeu de rotor (26) d'une éolienne (40), le procédé comprenant les étapes suivantes :
a) montage d'un dispositif (2) selon l'une des revendications 1 à 5 sur une bride de moyeu (28) du moyeu de rotor (26) de telle sorte que le collier de serrage formé par la structure de support (12) et l'élément d'écartement (4) parvient en engagement avec la bride de moyeu (28) lorsque le dispositif est monté sur la bride de moyeu (28),
b) rapprochement de la pale de rotor (46) de la bride de moyeu (28) et mise en contact d'une surface de contact (50) de la bride de pale (48) avec l'élément d'écartement (4),
c) montage d'écrous sur des vis qui se trouvent dans la bride de pale (48) et s'étendent depuis la bride de pale (48) à travers des orifices correspondants dans la bride de moyeu (28) par l'intermédiaire d'une distance entre une surface intérieure de la bride de moyeu (28) et une structure de renforcement intérieure du moyeu de rotor (26) par insertion latérale et placement d'écrous sur les têtes de vis des vis,
d) retrait du dispositif d'espacement (2) de la bride de moyeu (28) en retirant l'élément d'écartement (4) hors d'un espace entre la bride de moyeu (28) et la bride de pale (48), et
e) serrage des écrous sur les vis.

8. Dispositif selon la revendication 7,
l'élément d'écartement (4) étant extrait dans l'étape d) hors de l'espace entre la bride de moyeu (28) et la bride de pale (48) en retirant l'élément d'écartement (4) hors de l'espace par un mouvement dans un sens radial vers un intérieur de la bride de moyeu (28), l'élément d'écartement (4) étant retiré de l'espace avec le pied (10) en premier.
